# EUROPEAN PATENT SPECIFICATION

(11) **EP 2 633 977 B1**
(45) Date of publication and mention of the grant of the patent: **18.07.2018**
(21) Application number: 11836223.5
(22) Date of filing: 24.10.2011
(51) Int. Cl.: B29C 49/18, B29C 49/08, B29K 67/00, B29L 22/00, B29C 49/64, B29C 49/48, B29C 33/42, B29C 49/06, B29C 49/12

(54) **PRODUCTION METHOD FOR HOLLOW CONTAINER**
HERSTELLUNGSVERFAHREN FÜR EINEN HOHLEN BEHÄLTER
PROCÉDÉ DE FABRICATION DE CONTENANT CREUX

(30) Priority: 25.10.2010 JP 2010239087
(43) Date of publication of application: 04.09.2013
(73) Proprietor: Nissei ASB Machine Co., Ltd., Komoro-shi, Nagano 384-8585 (JP)
(72) Inventor: TSUKAMOTO, Hiroyuki, Komoro-shi Nagano 384-8585 (JP)
(74) Representative: Wunderlich & Heim Patentanwälte Partnerschaftsgesellschaft mbB
(86) International application number: PCT/JP2011/074453
(87) International publication number: WO 2012/057090

(56) References cited:
- EP-A1- 0 720 905
- EP-A1- 0 860 265
- JP-A- 4 131 220
- JP-A- 7 257 537
- JP-A- 8 119 283
- JP-A- 8 183 085
- JP-A- 58 081 131
- JP-A- 2003 231 170
- JP-A- 2004 209 690
- JP-A- 2006 281 722
- JP-A- 2007 230 652
- JP-U- H 072 031

## Description

### Technical Field

This invention relates to a method for production of a hollow container which is composed of a resin material such as a polyethylene terephthalate (may hereinafter be referred to as PET) resin.

### Background Art

Hollow containers composed of resin materials, for example, plastic containers, are generally obtained by disposing a tubular parison or a bottomed cylindrical preform in a blow mold of a blow molding apparatus, and blow molding the preform or the like by high pressure blowing air within the blow mold. In recent years, containers formed from stretch blow-molded polyethylene terephthalate (may hereinafter be referred to as PET) resins have been often used as hollow containers made of resins. However, hollow containers formed of PET resins are defective in that their heat resistance is low. To enhance the heat resistance, etc. of a hollow container, a proposal has been made, for example, for a production method which comprises subjecting a preform to primary blow molding to form a primary blow molded product larger than a final molded product, heat-treating the primary blow molded product by a heating device to shrink the primary blow molded product, and then performing its secondary blow molding to form a final molded product (see Patent Document 1).

A proposal has also been made, for example, for a production method comprising a primary molding step of blow molding a preform within a primary blow mold to form a primary molded product, a heat treatment step of heat-treating the primary molded product with a heat treatment mold, and a final molding step of blow molding an intermediate molded product, which has undergone the heat treatment step, within a final blow mold to form a final molded product (see Patent Document 2).

Some hollow containers composed of resins have various concave-convex patterns formed on their surface. The concave-convex patterns include a grain pattern and a striped pattern formed on the surface layer of the hollow container, as well as an inscription representing, for example, a trade name, a company name, or a model number. Such concave-convex patterns have thus far been formed by a secondary blow molding (final blow molding) step. However, the so formed concave-convex pattern has posed the problems that it does not exactly follow the mold used and lacks clarity.

For example, there has been a method designed to form fine concavities and convexities (concave-convex pattern) in a ridge part provided in a shoulder section of a bottle body-shaped container (hollow container), the method comprising forming reverse concavities and convexities beforehand on at least one of an inner surface of a preform formation mold and an inner surface of a primary mold, thereby forming fine concavities and convexities (concave-convex pattern) in an intermediate product (see, for example, Patent Document 3).

### Prior Art Documents

### Patent Documents

Patent Document 1: JP-A-3-205124
Patent Document 2: JP-A-08-187768
Patent Document 3: Japanese Patent No. 4111822

EP 0720905 A1 teaches a method of molding heat-resistant container as well as a set of molds for the method. Indicative for the described method is in particular that a concave-convex pattern is introduced in a final step, while a heat treatment step is performed without formation of a concave-convex pattern.

EP 0860265 A1 discloses a method of blow molding a heat-resistant container. The method comprises two consecutive heat treatment steps, while a concave-convex pattern is introduced in a final formation step.

### Summary of the Invention

### Problems to be solved by the invention

The above-mentioned method for formation of a concave-convex pattern described in Patent Document 3, however, is intended to form a concave-convex pattern, particularly, in a ridge part, and it remains uncertain whether this method can form a clear concave-convex pattern in a planar part. Moreover, this method is suitable for a method which comprises performing primary biaxial stretch blow molding of a preform by use of a primary mold to form a primary intermediate molded product, heat-shrinking the primary intermediate molded product released from the primary mold to form a secondary intermediate molded product, and performing secondary blowing of the secondary intermediate molded product with the use of a secondary mold to form a container (hollow container) (the method corresponds to the production method of Patent Document 1). This method does not always prove effective when applied to other production method such as the aforementioned latter method (Patent

The present invention has been accomplished in the light of the above circumstances, and aims to provide a method for production of a hollow container, the method being capable of forming a clear concave-convex pattern in the hollow container. In particular, it is an object of the present invention to provide a method for production of a hollow container, comprising: a step of blow molding a preform within a primary blow mold to form a primary blow molded product; an intermediate molding step of heating the primary blow molded product within a heat treatment mold, followed by shrinking the heated product, to form an intermediate molded product; and a final molding step of blow molding the intermediate molded product within a final blow mold to form the hollow container, wherein a clear concave-convex pattern is formed in the hollow container, as defined in claim 1.

### Means for solving the problems

A first aspect of the present invention, which solves the above-mentioned problems, is a method for production of a hollow container composed of a resin material and having a a grain pattern or an inscription which is formed as a concave-convex pattern on a surface thereof, comprising:a primary blow molding step of blow molding a preform composed of the resin material within a primary blow mold being held at a temperature equal to or lower than room temperature to form a primary blow molded product;an intermediate molding step of heating, while blowing, the primary blow molded product within a heat treatment mold heated to a predetermined temperature, followed by shrinking the heated product to a predetermined size, to thereby form an intermediate molded product; anda final molding step of blow molding the intermediate molded product within a final blow mold heated to a predetermined temperature, to thereby form the hollow container of a predetermined shape,wherein after reverse concavities and convexities corresponding to the concave-convex pattern have been formed on an inner wall surface of the heat treatment mold, the intermediate molded product having the concave-convex pattern in any part of the hollow container is formed in the intermediate molding step, and in the final molding step, the intermediate molded product is stretched in a longitudinal-axis direction and a transverse-axis direction by high pressure air supplied to the inside thereof, and is pressed against an inner wall surface of the final blow mold by high pressure air.

A second aspect of the present invention is the method for production of a hollow container according to the first aspect, wherein the primary blow mold concurrently serves as the heat treatment mold.

A third aspect of the present invention is the method for production of a hollow container according to the first or second aspect, wherein the intermediate molded product has an opening neck section, a tubular barrel section, a bottom section sealing an end of the barrel section, a shoulder section connecting the neck section and the barrel section, and a heel section connecting the barrel section and the bottom section; and in the intermediate molding step, a grain pattern as the concave-convex pattern is formed in each of the shoulder section and the heel section.

A fourth aspect of the present invention is the method for production of a hollow container according to any one of the first to fourth aspects, wherein in the intermediate molding step, the primary blow molded product is heated in the heat treatment mold equipped with a panel member having the concave-convex pattern formed therein.

### Effects of the Invention

With the present invention described above, the concave-convex pattern such as the grain pattern or the inscription can be formed clearly in the hollow container. That is, a vivid concave-convex pattern which enables concavities and convexities to be unequivocally distinguished from each other can be formed in the hollow container. When a relatively fine concave-convex pattern, such as a grain pattern, is formed on the surface of the hollow container, moreover, mold releasability of the primary blow molded product can be improved, and the quality of the hollow container can be improved.

### Brief Description of the Drawings

[Fig. 1] is a partial sectional view of a hollow container according to an embodiment of the present invention.
[Figs. 2(a) and 2(b)] are sectional views showing essential parts of the hollow container according to the embodiment of the present invention.
[Fig. 3] is a schematic explanation drawing showing molded products obtained in respective steps of a method for production of the hollow container according to the embodiment of the present invention.
[Fig. 4] is a schematic sectional view illustrating an injection step according to the embodiment of the present invention.
[Fig. 5] is a schematic sectional view illustrating a primary blow molding step according to the embodiment of the present invention.
[Figs. 6(a) and 6(b)] are schematic sectional views illustrating a heat treatment step according to the embodiment of the present invention.
[Fig. 7] is a schematic sectional view illustrating a final molding step according to the embodiment of the present invention.

### Mode for Carrying Out the Invention

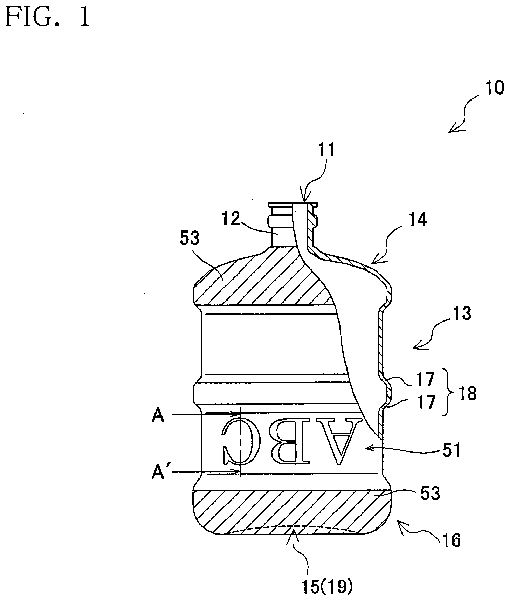

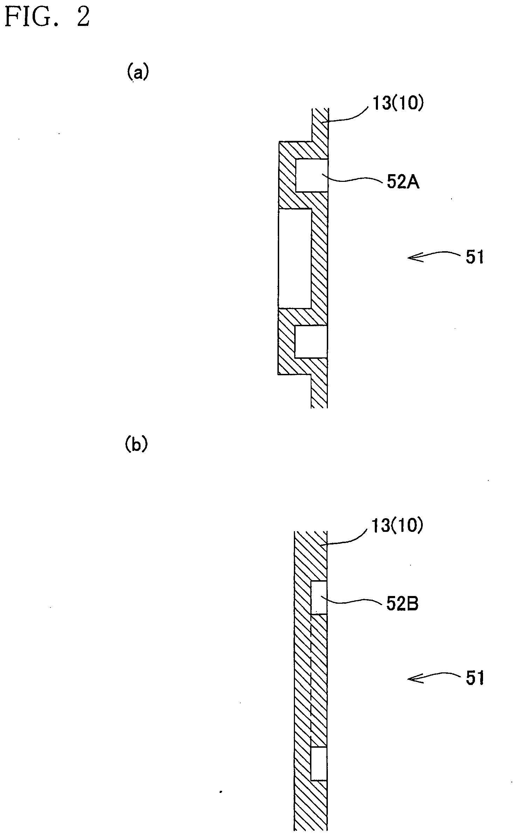

An embodiment of the present invention will now be described with reference to the accompanying drawings. Fig. 1 is a partial sectional view showing a hollow container according to the embodiment of the present invention. Figs. 2(a) and 2(b) are sectional views taken along line A-A' in Fig. 1.

A hollow container 10 shown in Fig. 1 is formed from a resin material, for example, a thermoplastic synthetic resin such as a polyethylene terephthalate resin. It is a large container with a volume of the order of 5 gallons (about 20 liters) which is used as a refillable bottle for mineral water. The hollow container 10 is composed of a neck section 12 having an outer diameter, for example, of the order of 55 mm, the neck section 12 having a mouth portion 11 at its upper end; a tubular barrel section 13 having a maximum diameter, for example, of the order of 270 mm; a shoulder section 14 connecting the neck section 12 and the barrel section 13 and gradually fanning out from the neck section 12; a bottom section 15 sealing an end of the barrel section 13; and a heel section 16 connecting the barrel section 13 and the bottom section 15.

A reinforcing portion 18 composed of a plurality of annular inclined portions 17 is formed in the barrel section 13. A push-up bottom portion 19 protruding toward the interior of the container is formed in the bottom section 15. The rigidity (buckling strength) of the hollow container 10 is enhanced by the reinforcing portion 18 and the push-up bottom portion 19, thereby preventing the barrel section 13 or the bottom section 15 from deforming when a content material such as mineral water is placed in the hollow container 10.

The shoulder section 14 of the hollow container 10, in the present embodiment, is formed in a larger thickness than the wall thickness of the barrel section 13. This feature also contributes to enhancing the rigidity of the hollow container 10. An increase in the wall thickness of the shoulder section 14 is apt to cause blushing of the PET resin during the manufacturing process. According to the present invention, however, the transparency of the shoulder section 14 can be ensured satisfactorily, as will be described later.

In the hollow container 10, a concave-convex pattern is formed in a predetermined part. With the present embodiment, an inscription 51 as the concave-convex pattern is formed in the barrel section 13 of the hollow container 10. This inscription 51 represents, for example, a trade name, a company name, or a model number. In the present embodiment, lettering comprising "ABC", which is an example of the inscription 51, is formed in the barrel section 13 of the hollow container 10.

The inscription 51, for example, is composed of concavities 52A formed by deforming the barrel section 13 of the hollow container 10 so as to protrude toward the interior of the container, as shown in Fig. 2(a). By this procedure, the wall thickness of the barrel section 13 of the hollow container 10 is rendered a nearly uniform thickness, including the portion of the inscription 51. If the wall thickness of the barrel section 13 of the hollow container 10 is relatively large, the inscription 51 may be constituted by concavities 52B formed by suppressing a part, in the thickness direction, of the barrel section 13 of the hollow container 10, as shown in Fig. 2(b). Alternatively, the inscription 51 may be formed either by concaving the surroundings of the line of letters to convex the line of letters, or conversely by convexing the surroundings of the line of letters to concave the line of letters.

The surfaces of the shoulder section 14 and the heel section 16 of the hollow container 10 are rough surfaces where many fine concavities and convexities are formed. In the present embodiment, grain patterns 53 as concave-convex patterns are formed on the surfaces of the shoulder section 14 and the heel section 16 of the hollow container 10, as indicated by oblique lines in Fig. 1. The concave-convex pattern such as the grain pattern 53 or the inscription 51 may be formed in any part of the hollow container 10. For example, the grain pattern 53 may be formed in the reinforcing portion 18 provided protrusively in the middle of the barrel section 13.

An explanation will be offered for a method of producing the above-described hollow container 10 according to the present invention.

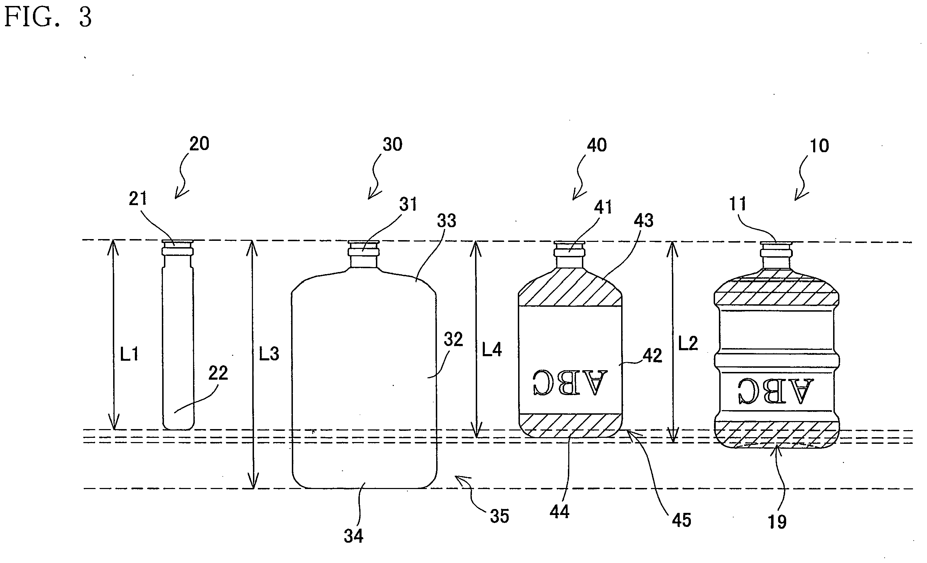

As shown in Fig. 3, the hollow container 10 is formed via a preform 20, a primary blow molded product 30, and an intermediate molded product 40.

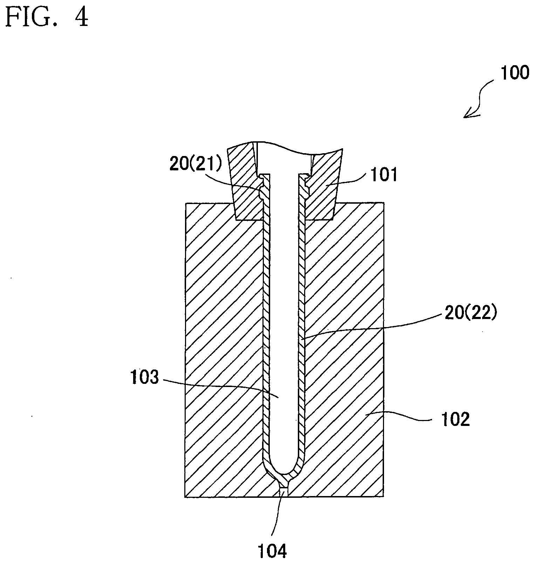

First, as shown in Fig. 4, the preform 20 is formed by injection molding by an injection molding unit 100 (injection step). The preform 20 is a tubular body comprising a neck section 21 and a bottomed tubular barrel section 22, and is formed, for example, such that its wall thickness is of the order of 6 mm to 9 mm. A longitudinal-axis length L1 of the preform 20 may be larger or smaller than a longitudinal-axis length L2 of the hollow container 10 which is a final molded product. The preform 20 shown in Fig. 3 represents an example in which the longitudinal-axis length L1 is smaller than the longitudinal-axis length L2 of the hollow container 10. The longitudinal-axis length L2 in the hollow container 10 is the length in the central part of the hollow container 10, and is the length ranging from the mouth portion 11 to the push-up bottom portion 19 of the hollow container 10 as shown in Fig. 3.

The injection molding unit 100 for molding the preform 20 is composed of, for example, a neck mold 101, comprising a split mold openable and closable in a horizontal direction, for defining an outer wall surface of the neck section 21; an injection cavity mold 102 for defining an outer wall surface of the barrel section 22; and a core mold 103 for defining an inner wall surface of the preform 20.
The PET resin is charged into the injection cavity mold 102 through a gate 104 provided on a lower side of the central part of the injection cavity mold 102, whereby the preform 20 is injection molded.

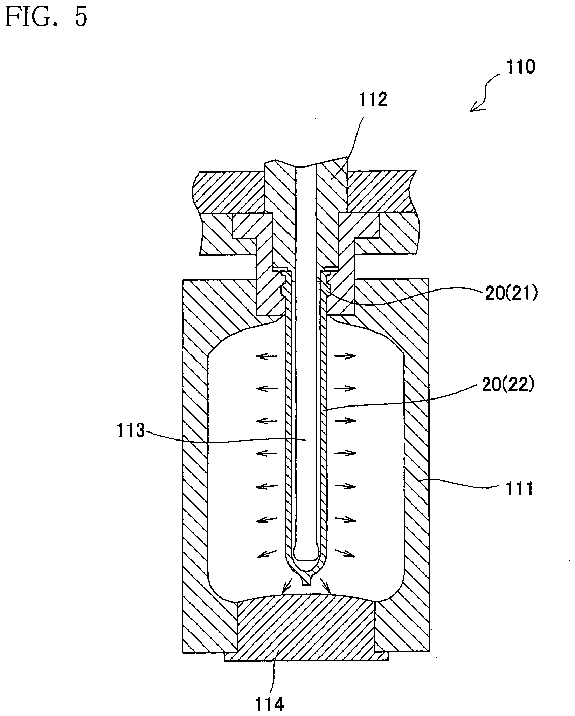

The molded preform 20 is transported to a heating unit (not shown), where it is heated to a predetermined temperature suitable for stretching. Then, as shown in Fig. 5, the heated preform 20 is disposed within a primary blow molding unit 110. The blow molding of the preform 20 within the primary blow molding unit 110 results in the formation of a primary blow molded product 30 having a size comparable to or larger than the size of the hollow container 10 which is a final molded product (primary blow molding step).

The primary blow molding unit 110 is equipped with, for example, an openable and closable primary blow mold (split mold) 111; a blow core mold 112 into which the neck section 21 of the preform 20 is inserted; a stretching rod 113 upwardly and downwardly movable through the blow core mold 112; and a primary blow bottom mold 114. The primary blow molding unit 110 has an inner wall surface following the contour shape of the primary blow molded product 30.

In the primary blow molding step, the preform 20 is stretched in the direction of the longitudinal axis by the stretching rod 113, and is also stretched in the direction of the transverse axis by high pressure air. Thus, the preform 20 is pressed against the inner wall surface of the primary blow molding unit 110, whereby the primary blow molded product 30 is formed. At this time, the primary blow molding unit 110 is maintained at a temperature equal to or lower than room temperature (ordinary temperature) without being heated. Thus, the primary blow molded product 30 withdrawn from the primary blow molding unit 110 assumes a shape following the inner wall surface of the primary blow molding unit 110.

Here, the primary blow molded product 30 is formed by blow molding the preform 20 in the primary blow molding step. However, it is permissible to carry out a so-called pre-blowing step of slightly stretching the preform 20 in its diametrical direction before the primary blow molding step. By this procedure, the stretch ratio of the preform 20 in the primary blow molding step can be kept down, so that the primary blow molded product 30 can be formed more satisfactorily.

The so formed primary blow molded product 30 is composed of a neck section 31 (21) molded in the injection step, a tubular barrel section 32, a shoulder section 33 connecting the barrel section 32 and the neck section 31, a bottom section 34 sealing an end of the barrel section 32, and a heel section 35 connecting the barrel section 32 and the bottom section 34, and has a larger size than the size of the hollow container 10 which is the final molded product. A longitudinal-axis length L3, including the neck section 31, is desirably larger than the longitudinal-axis length L2 of the hollow container 10 (see Fig. 3).

In performing the primary blow molding for formation of the hollow container 10 which is a large container, it is preferred to adjust the stretching temperature of the preform 20, as appropriate, so as to make the wall thickness of the shoulder section 33 of the primary blow molded product 30 larger than the wall thickness of its barrel section 32. By so doing, the stretch ratio of the shoulder section 33 is kept low, and blushing of the PET resin in the shoulder section 33 associated with crystallization due to stretching can be suppressed more reliably. Since the wall thickness of the shoulder section 33 is held to be relatively large, the rigidity of the hollow container 10 as the final molded product can be enhanced.

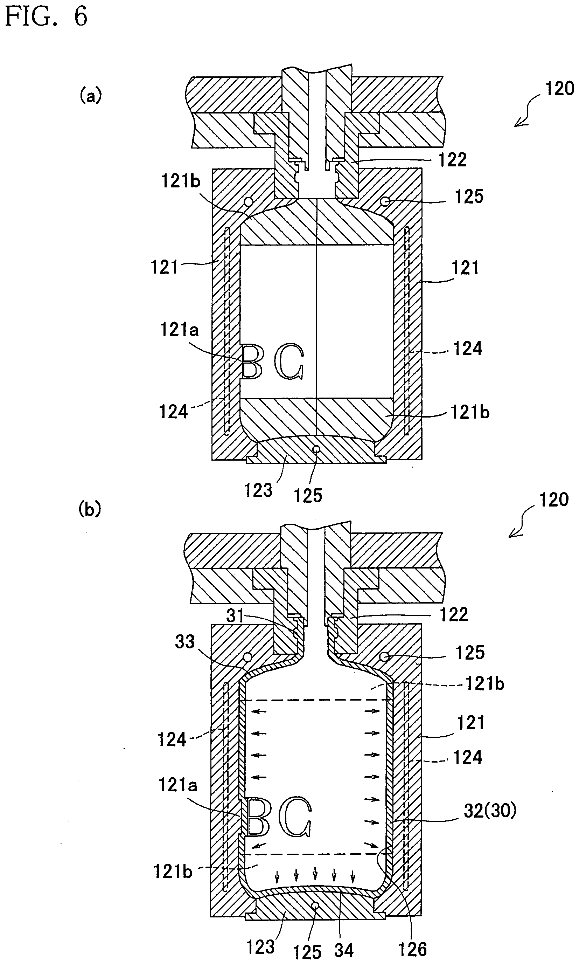

Then, as shown in Figs. 6(a), 6(b), the primary blow molded product 30 cooled to room temperature (ordinary temperature) is disposed within a heat-treating blow molding unit (heat treatment mold) 120, where it is heat-treated, and then the primary blow molded product 30 is contracted to a smaller size than the size of the hollow container 10 to obtain an intermediate molded product 40 (heat treatment step). After the primary blow molded product 30 has been cooled to room temperature (ordinary temperature), the heat treatment step may be immediately performed for the primary blow molded product 30. Actually, however, the aforementioned injection step and primary blow molding step are repeated to prepare a plurality of the primary blow molded products 30 at a stroke, whereafter the heat treatment step is performed for the plurality of primary blow molded products 30.

As shown in Fig. 6(a), the heat-treating blow molding unit 120 is composed of a heat treatment mold (split mold) 121 where the primary blow molded product 30 is accommodated; a heat-treating blow core mold 122 into which the neck section 31 of the primary blow molded product 30 is inserted; and a push-up bottom heating mold 123 corresponding to the bottom section 34 of the primary blow molded product 30. The molding space of the heat treatment mold 121 is formed in a shape nearly identical with the external shape of the primary blow molded product 30.

On the inner surface of the heat treatment mold 121, a reverse concave-convex pattern corresponding to a concave-convex pattern to be formed in the hollow container 10 is formed in a part corresponding to the barrel section 32 of the primary blow molded product 30. That is, a protruding portion 121a comprising lettering, which is the reverse of "ABC", and protruding toward the inside of the heat treatment mold 121 is formed in the part of the inner surface of the heat treatment mold 121 which opposes the barrel section 32. A reverse grain pattern 121b, which has concavities and convexities reversed relative to the grain pattern 53, is formed in each of parts corresponding to the shoulder section 33 and the heel section 35, as indicated by oblique lines in Fig. 6(a). The reverse concave-convex patterns may be formed directly on the heat treatment mold 121, but may be formed on a panel which is fixed to the surface of the heat treatment mold 121 and which is a member separate from the heat treatment mold 121. By so doing, it becomes possible to change the concave-convex patterns simply by replacing the panel, without replacing the heat treatment mold 121. Hence, maintenance becomes easy, and costs are reduced.

Further, the heat treatment mold 121 has a plurality of, for example, 12 rod-shaped heaters 124 provided in a part corresponding to the barrel section 32 of the primary blow molded product 30. These heaters 124 are built in at nearly equal intervals around the molding space of the heat treatment mold 121. The heaters 124 are adapted to heat the barrel section 32 of the primary blow molded product 30 to a predetermined temperature.

The heat treatment mold 121 may have, for example, a supply path 125 formed in a part corresponding to the shoulder section 33 of the primary blow molded product 30, the supply path 125 being supplied with a temperature control medium such as a heated oil. Because of this feature, the barrel section 32 and the shoulder section 33 of the primary blow molded product 30 can be heated to different temperatures by the heat treatment mold 121. The heat-treating blow core mold 122 is configured to be capable of supplying and discharging air through its leading end. The heat-treating blow molding unit 120 may be equipped with a rod-shaped member similar to the stretching rod 113 of the primary blow molding unit 110. By utilizing this rod-shaped member, the bottom section 34 is held at an appropriate position on the push-up bottom heating mold 123. This measure can prevent the displacement or unexpected deformation of the primary blow molded product 30 in the heat treatment step.

The heat-treating blow molding unit 120 is preheated to a predetermined temperature. In the heat treatment step, as shown in Fig. 6(b), high pressure air is fed into the primary blow molded product 30 to keep the primary blow molded product 30 in contact, for a predetermined time, with the inner wall surface in the heat treatment mold 121, where the protruding portion 121a and the reverse grain patterns 121b have been formed, to thereby perform heat treatment (heat setting) of the primary blow molded product 30. As a result, the inscription 51 comprising the lettering "ABC" is formed in the barrel section 32 of the primary blow molded product 30, and the grain patterns 53 are formed on the surfaces of the shoulder section 33 and the heel section 35 (see Fig. 3).

Then, the gas within the primary blow molded product 30 is discharged, and the primary blow molded product 30 is withdrawn from the heat treatment mold 121 to form the intermediate molded product 40. That is, when the gas within the primary blow molded product 30 is discharged, and the primary blow molded product 30 is withdrawn from the heat treatment mold 121, the primary blow molded product 30 shrinks, becoming the intermediate molded product 40 having the longitudinal-axis length L3 smaller than the longitudinal-axis length L2 of the hollow container 10 which is the final molded product.

The so formed intermediate molded product 40 is formed in a smaller size than the size of the hollow container 10 which is the final molded product. The intermediate molded product 40 is composed of a neck section 41, a tubular barrel section 42, a shoulder section 43 connecting the barrel section 42 and the neck section 41, a bottom section 44 closing an end of the barrel section 42, and a heel section 45 connecting the barrel section 42 and the bottom section 44. A longitudinal-axis length L4, including the neck section 41, is also smaller than the longitudinal-axis length L2 of the hollow container 10 (see Fig. 3).

The inscription 51 comprising the lettering "ABC" is formed in the barrel section 42 of the intermediate molded product 40 having undergone the heat treatment step as above. The grain pattern 53 is formed in each of the shoulder section 43 and the heel section 45 (see Fig. 3).

Concave-convex patterns, such as the above-mentioned inscription 51 and grain patterns 53, are formed in the primary blow molded product 30 (intermediate molded product 40) in the heat treatment step, whereby the inscription 51 and the grain patterns 53 can be formed very clearly. The depths and sizes of the concavities and convexities of the inscription 51 are determined desirably in consideration of the degree of shrinkage after heat treatment, the desirable sizes in the final molded product, and so on.

In the heat treatment step, at least the barrel section 32 of the primary blow molded product 30 is heated preferably at a temperature higher than the heating temperature in a final molding step to be described later, for example, at a temperature of the order of 140°C to 180°C. In the present embodiment, for example, the heating temperature of the heat treatment mold 121 by the plurality of heaters 124 is set at a temperature of the order of 140°C to 180°C. The heat-treating (heat-setting) time in this case is preferably set at a time between 8 seconds to 16 seconds. By so doing, the residual stress of the primary blow molded product 30 is relieved, and the heat resistance of the hollow container 10 which is the final molded product is increased.

To form clear concave-convex patterns in the primary blow molded product 30, a higher heating temperature is preferred for the primary blow molded product 30 in the heat treatment step. However, too high a heating temperature causes a blushing phenomenon due to the crystallization of the PET resin, resulting in the loss of transparency of the primary blow molded product 30. Hence, the heating temperature of the primary blow molded product 30 in the heat treatment step is preferably in the range of 140°C to 180°C as mentioned above, and particularly desirably in the range of 160°C to 170°C.

When the shoulder section 33 of the primary blow molded product 30 is formed in a larger wall thickness than the barrel section 32 (particularly in the case of a large container), heating the shoulder section 33 at a temperature comparable to that of the barrel section 32 in the heat treatment step may bring about blushing associated with spherical crystallization of the PET resin during cooling. Thus, the shoulder section 33 is preferably heated at a temperature lower than the temperature of the barrel section 32. With the present embodiment, the temperature of the shoulder section 33 is adjusted by supplying the temperature control medium in the supply path 125 of the heat treatment mold 121. This means can suppress blushing due to spherical crystallization of the PET resin in the shoulder section 33 of a relatively large wall thickness. For the same reasons, it is preferred that in the heat treatment step, the bottom section 34 of the primary blow molded product 30 be also heated to a relatively low temperature by the temperature control medium.

In the heat treatment step, there are parts difficult to release from the mold, such as the shoulder section 33 and heel section 35 of the primary blow molded product 30, as well as the intermediate reinforcing portion 18 of the barrel section 13. In heat-treating the primary blow molded product 30 at a relatively high temperature as above, mold releasability, in particular, declines. In association with this decline in mold releasability, qualities, such as transparency and dimensional accuracy, required of the hollow container 10 which is the final molded product may deteriorate.

By forming the grain patterns 53 in the shoulder section 33 and the heel section 35 of the primary blow molded product 30 in the heat treatment step, however, the mold release characteristics of the shoulder section 33 and the heel section 35 markedly improve. The improvement in the mold release characteristics enables the heat treatment step to be performed at a higher temperature. Thus, the heat resistance and the morphological quality of the hollow container 10, which is the final molded product, can be enhanced, and the manufacturing efficiency can be increased.

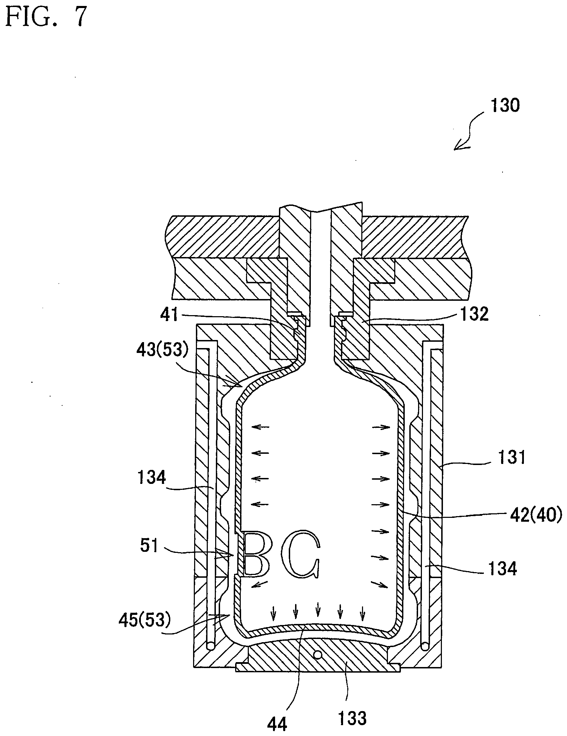

Then, the intermediate molded product 40 is disposed in a final blow molding unit 130 heated to a predetermined temperature, as shown in Fig. 7. The intermediate molded product 40 is blow molded in the final blow molding unit 130, whereby the hollow container 10, which is the final molded product, is obtained (see Fig. 3). At this time, the inscription 51 and the grain patterns 53 formed in the intermediate molded product 40 remain substantially unchanged in shape, and the hollow container 10 provided with a clear inscription 51 and clear grain patterns 53 is formed.

The final blow molding unit 130 is equipped with a final blow mold (split mold) 131 accommodating the intermediate molded product 40 and divided in two in the vertical direction; a final-treating blow core mold 132 into which the neck section 41 of the intermediate molded product 40 is inserted; and a push-up bottom mold 133 corresponding to the bottom section 44 of the intermediate molded product 40. A plurality of supply paths 134 to be supplied with a temperature control medium are provided along the longitudinal axis around the molding space of the final blow mold 131. The intermediate molded product 40 within the molding space is heated to a predetermined temperature by the temperature control medium circulating in the plurality of supply paths 134. The final blow molding unit 130 may also have a stretching rod, like the primary blow molding unit 110, although this is not illustrated.

In the final molding step, the intermediate molded product 40 disposed in the final blow mold 131 is stretched in the longitudinal-axis direction and the transverse-axis direction by high pressure air supplied to the inside thereof, and is pressed against the inner wall surface of the final blow mold 131 for heat treatment. As a result, the hollow container 10, which is the final molded product, is formed (see Fig. 1). Concretely, the final blow mold 131 is preheated to a predetermined temperature, e.g., 80°C to 110°C. At this temperature, the intermediate molded product 40 is heat-set for a predetermined time, for example, 15 seconds to 30 seconds, with the result that the hollow container 10 is formed.

With the present invention, as described above, concave-convex patterns formed in the hollow container 10, such as the inscription 51 and the grain patterns 53, are formed at the same time as when the primary blow molded product 30 is heat-treated (heat-set) in the heat-treating blow molding unit 120. By this procedure, the hollow container 10 having the concave-convex patterns, such as the inscription 51 and the grain patterns 53, clearly formed therein can be obtained.

By producing the hollow container 10 comprising the PET resin by the foregoing method, the qualities of the hollow container 10, such as heat resistance and transparency, can be enhanced. When the primary blow molded product 30 is contracted in the heat treatment step to form the intermediate molded product 40, moreover, residual strain is eliminated. Thus, the heat resistance of the hollow container 10, which is the final molded product, can be enhanced.

When the primary blow mold is also serving the function of the heat treatment mold, a pre-blowing mold of a temperature control unit in an injection stretch blow molding machine (one-stage machine) may be utilized.

Moreover, after concave-convex patterns are imparted to the primary blow molded product in the heat treatment step, concave-convex patterns may be further imparted to the intermediate molded product in the final molding step as well. In other words, the shapes of the concave-convex patterns imparted in the heat treatment step may be further settled in the final molding step. By so doing, it becomes possible to form clearer concave-convex patterns which have not been accomplishable by the conventional methods imparting concave-convex patterns only in the final molding step. Furthermore, a heat-resistant hollow container with improved design properties can be produced.

In the above-described embodiment, the present invention has been explained mainly illustrating as the hollow container the large container with a volume of the order of 5 gallons (about 20 liters). However, the present invention can be applied to a method for producing containers of all sizes, for example, small to medium-sized containers with a volume of the order of 0.5 to 2 liters.

### Explanations of Letters or Numerals

- 10: Hollow container
- 13: Barrel section
- 14: Shoulder section
- 16: Heel section
- 20: Preform
- 30: Primary blow molded product
- 32: Barrel section
- 33: Shoulder section
- 34: Bottom section
- 35: Heel section
- 40: Intermediate molded product
- 42: Barrel section
- 43: Shoulder section
- 44: Bottom section
- 45: Heel section
- 51: Inscription
- 52: Concavity
- 53: Grain pattern
- 100: Injection molding unit
- 110: Primary blow molding unit
- 120: Heat-treating blow molding unit
- 121: Heat treatment mold
- 121a: Protruding portion
- 121b: Reverse grain pattern
- 122: Heat-treating blow core mold
- 130: Final blow molding unit

## Claims

1. A method for production of a hollow container composed of a resin material and having a grain pattern or an inscription which is formed as a concave-convex pattern on a surface thereof, comprising:
a primary blow molding step of blow molding a preform composed of the resin material within a primary blow mold being held at a temperature equal to or lower than room temperature to form a primary blow molded product;
an intermediate molding step of heating, while blowing, the primary blow molded product within a heat treatment mold heated to a predetermined temperature, followed by shrinking the heated product to a predetermined size, to thereby form an intermediate molded product; and
a final molding step of blow molding the intermediate molded product within a final blow mold heated to a predetermined temperature, to thereby form the hollow container of a predetermined shape,
wherein after reverse concavities and convexities corresponding to the concave-convex pattern have been formed on an inner wall surface of the heat treatment mold, the intermediate molded product having the concave-convex pattern in any part of the hollow container is formed in the intermediate molding step, and in the final molding step, the intermediate molded product is stretched in a longitudinal-axis direction and a transverse-axis direction by high pressure air supplied to the inside thereof, and is pressed against an inner wall surface of the final blow mold by high pressure air.

2. The method for production of a hollow container according to claim 1, wherein
the primary blow mold concurrently serves as the heat treatment mold.

3. The method for production of a hollow container according to claim 1 or 2, wherein
the intermediate molded product has in addition to the barrel section an opening neck section, a tubular barrel section, a bottom section sealing an end of the barrel section, a shoulder section connecting the neck section and the barrel section, and a heel section connecting the barrel section and the bottom section, and
in the intermediate molding step, a grain pattern as the concave-convex pattern is formed in each of the shoulder section and the heel section.

4. The method for production of a hollow container according to any one of claims 1 to 3, wherein
in the intermediate molding step, the primary blow molded product is heated in the heat treatment mold equipped with a panel member having the concave-convex pattern formed therein.

## Patentansprüche

1. Verfahren zum Herstellen eines Hohlkörpers aus einem Kunststoffmaterial und mit einer Maserung oder einer Beschriftung, welche aus einem konkaven-konvexen Muster auf einer Oberfläche des Hohlkörpers gebildet ist, mit:
- einem primären Blasformschritt des Blasformens einer Vorform aus dem Kunststoffmaterial mit einer primären Blasform, welche auf einer Temperatur gleich oder geringer als eine Raumtemperatur gehalten ist, um ein primäres Blasformprodukt zu bilden,
- einem Zwischenformschritt des Heizen und gleichzeitigem Blasformens des primär blasgeformten Produktes in einer Wärmebehandlungsform, welche auf eine vorgegebene Temperatur aufgeheizt ist, und einem nachfolgenden Schrumpfen des aufgeheizten Produktes auf eine vorgegebene Größe, um hierdurch ein zwischengeformtes Produkt zu erhalten, und
- einen finalen Formschritt des Blasformens des zwischengeformten Produktes in einer finalen Blasform, welche auf eine vorgegebene Temperatur aufgeheizt ist, um hierdurch den Hohlkörper mit einer vorgegebenen Form zu bilden,
wobei, nachdem umgekehrte Einwölbungen und Auswölbungen korrespondierend zu dem konkaven-konvexen Muster an einer Innenwandfläche der Wärmebehandlungsform ausgebildet wurden, das zwischengeformte Produkt in dem Zwischenformschritt mit dem konkaven-konvexen Muster in jedem Teil des Hohlkörpers gebildet wird und in dem finalen Formschritt das zwischengeformte Produkt in einer Längsachsenrichtung und einer Querachsenrichtung durch Einleiten von Druckluft in das zwischengeformte Produkt gestreckt wird und gegen eine Innenwandfläche der finalen Blasform durch die Druckluft gedrückt wird.

2. Verfahren zum Herstellen eines Hohlkörpers nach Anspruch 1,
wobei die primäre Blasform gleichzeitig als die Wärmbehandlungsform dient.

3. Verfahren zum Herstellen eines Hohlkörpers nach Anspruch 1 oder 2,
wobei das zwischengeformte Produkt zusätzlich zu dem Behälterabschnitt einen Halsabschnitt, einen rohrförmigen Behälterabschnitt, einen Bodenabschnitt, welcher ein Ende des Behälterabschnitts abschließt, einen Schulterabschnitt, welcher den Halsabschnitt und den Behälterabschnitt verbindet, und einen Absatzabschnitt aufweist, welcher den Behälterabschnitt und den Bodenabschnitt verbindet, und in dem Zwischenformschritt eine Maserung als das konkave-konvexe Muster in dem Schulterabschnitt und dem Absatzabschnitt eingeformt wird.

4. Verfahren zum Herstellen eines Hohlkörpers nach einem der Ansprüche 1 bis 3, wobei in dem Zwischenformschritt das primär blasgeformte Produkt in der Wärmebehandlungsform aufgeheizt wird, welche mit einem Wandelement mit dem darin eingeformten konkaven-konvexen Muster ausgestattet ist.

## Revendications

1. Procédé de fabrication d'un contenant creux composé d'un matériau en résine et ayant un motif de grain ou une inscription qui est sous la forme d'un motif comprenant des dépressions et des projections sur une surface de celui-ci, comprenant :
une étape de moulage par soufflage primaire consistant en un moulage par soufflage d'une préforme composée du matériau en résine à l'intérieur d'un moule de soufflage primaire maintenu à une température inférieure ou égale à la température ambiante pour former un article moulé par moulage par soufflage primaire ;
une étape de moulage intermédiaire consistant en un chauffage, simultanément à un soufflage, de l'article moulé par moulage par soufflage primaire dans un moule de traitement thermique chauffé à une température prédéterminée, suivi d'une contraction de l'article chauffé à une taille prédéterminée, pour ainsi former un article moulé intermédiaire ; et
une étape de moulage final consistant en un moulage par soufflage de l'article moulé intermédiaire dans un moule de soufflage final chauffé à une température prédéterminée, pour ainsi former le contenant creux d'une forme prédéterminée,
dans lequel après que des dépressions et des projections inverses qui correspondent au motif comprenant des dépressions et des projections aient été formées sur une surface de la paroi interne du moule de traitement thermique, l'article moulé intermédiaire ayant le motif comprenant des dépressions et des projections dans n'importe quelle partie du contenant creux est formé dans l'étape de moulage intermédiaire, et
dans l'étape de moulage final, l'article moulé intermédiaire est étiré dans une direction de l'axe longitudinal et une direction de l'axe transversal par de l'air à haute pression fourni à l'intérieur de celui-ci, et est pressé contre une surface de la paroi interne du moule de moulage par soufflage final par l'air à haute pression.

2. Procédé de fabrication d'un contenant creux selon la revendication 1, dans lequel le moule de soufflage primaire sert également de moule de traitement thermique.

3. Procédé de fabrication d'un contenant creux selon la revendication 1 ou 2, dans lequel
l'article moulé intermédiaire comporte, outre la section de cylindre, une section de col d'ouverture, une section de cylindre tubulaire, une section de fond fermant de façon étanche une extrémité de la section de cylindre, une section d'épaulement reliant la section de col et la section de cylindre, et une section de talon reliant la section de cylindre et la section de fond, et
dans l'étape de moulage intermédiaire, un motif de grain en tant que motif comprenant des dépressions et des projections est formé dans chacune de la section d'épaulement et de la section de talon.

4. Procédé de fabrication d'un contenant creux selon l'une quelconque des revendications 1 à 3, dans lequel
dans l'étape de moulage intermédiaire, l'article moulé par moulage par soufflage primaire est chauffé dans le moule de traitement thermique équipé d'un élément de panneau ayant le motif comprenant des dépressions et des projections formé dans celui-ci.
